**Europäisches Patentamt**

**European Patent Office**

**Office européen des brevets**

(19)

(11) Numéro de publication: **0 106 744**

**B1**

(12) **FASCICULE DE BREVET EUROPÉEN**

(45) Date de publication du fascicule du brevet:
14.01.87

(51) Int. Cl.⁴: **C 03 C 17/23**

(21) Numéro de dépôt: **83401875.6**

(22) Date de dépôt: **26.09.83**

(54) **Procédé de dépôt d'une couche d'oxyde d'étain sur un substrat.**

(30) Priorité: **27.09.82 JP 167958/82**

(43) Date de publication de la demande:
**25.04.84 Bulletin 84/17**

(45) Mention de la délivrance du brevet:
**14.01.87 Bulletin 87/3**

(84) Etats contractants désignés:
**BE DE FR GB IT LU NL SE**

(56) Documents cité:
**EP-A-0 028 572**
**FR-A-2 380 997**
**FR-A-2 391 966**

(73) Titulaire: **SAINT- GOBAIN VITRAGE, Les Miroirs
18, avenue d'Alsace, F-92400 Courbevoie (FR)**

(72) Inventeur: **Kawahara, Hideo, 8-3- 205 Minami
Sakurazuka 2-chome, Toyonaka- shi Osaka- fu (JP)**
Inventeur: **Kato, Yukihiro, 2,1- 403 Nigawa- cho,
Nishinomiya- shi Hyogo- ken (JP)**

(74) Mandataire: **Breton, Jean- Claude, SAINT- GOBAIN
RECHERCHE 39, quai Lucien Lefranc, F-93300
Aubervilliers Cedex (FR)**

LIBER, STOCKHOLM 1987

## Description

La présente invention concerne le dépôt d'une couche d'oxyde d'étain sur la surface d'un substrat en verre, céramique, métal ou autres matières.

Plus précisément, elle porte sur une méthode de dépôt d'une couche d'oxyde d'étain par la mise en contact d'une poudre de composés organiques d'étain avec la surface d'un substrat en verre, céramique, métal ou autres matières, chauffé à une haute température. En général, la couche d'oxyde d'étain étant très dure, elle est utilisée largement pour éviter la détérioration de la surface des vaisselles, bouteilles, etc... Par ailleurs, il y a de nombreuses applications profitant du caractère semi-conducteur de la couche d'oxyde d'étain; par exemple, des verres revêtus d'une telle couche sont largement employés comme conducteurs transparents tels qu'électrodes pour des cristaux liquides, verres anti-buée, etc... Egalement, des plaquettes céramiques fines revêtues d'une couche d'oxyde d'étain sont extrêmement employées en tant que pièces électriques. En plus, en profitant du caractère réflecteur des rayons infra-rouges de la couche d'oxyde d'étain, des verres ou tubes métalliques revêtus d'une couche d'oxyde d'étain sont utilisés comme couvercles ou tubes de capteurs solaires.

Il existe plusieurs méthodes pour déposer une couche d'oxyde d'étain sur la surface d'un substrat en verre, céramique, métal ou autres matières. Comme méthode appropriée pour la fabrication en série, depuis longtemps, on utilise la méthode consistant à pulvériser une solution de tétrachlorure d'étain sur la surface dudit substrat maintenu à haute température. Depuis quelques années, on utilise également la méthode dite -CVD- (Coating Vapor Deposition), consistant à mettre en contact la vapeur obtenue par chauffage et vaporisation de tétrachlorure d'étain ou de diméthyl dichlorure d'étain, avec un substrat en verre, céramique, métal ou autres matières, chauffé à haute température.

En plus, pour remplacer les méthodes précitées, on utilise également la méthode de dépôt consistant à projeter directement une poudre de composés organiques d'étain sur la surface du verre à haute température.

La méthode utilisant directement une poudre consiste à mettre en contact des composés organiques d'étain en poudre en suspension dans l'air ou dans d'autres gaz, avec la surface du verre à haute température. Comparée à la méthode de pulvérisation de la solution ou à la méthode CVD, cette méthode utilisant une poudre permet une meilleure efficacité car la vitesse de dépôt de la couche est plus grande.

Normalement, comme composés organiques d'étain, on utilise souvent l'oxyde de dibutyl étain $(C_4H_9)_2SnO$, désigné ci-après "DBTO". Dans un tel cas, pour améliorer la conductivité électrique des couches d'oxyde d'étain, il est connu par la publication de brevet français n° 2 380 997 d'ajouter de l'acide fluorhydrique, agissant comme dopant, dans le courant de poudre en suspension, ladite poudre étant constituée de particules ne dépassant pas 20 micromètre.

On a également proposé d'employer comme matériau de départ un mélange d'une poudre de composés organiques d'étain avec, comme dopant, du fluorure d'ammonium $(NH_4F)$ en poudre. Toutefois, malgré ces méthodes, la conductivité électrique reste insuffisante notamment pour réaliser des verres anti-buée de grande surface ou des électrodes en verre pour piles solaires.

La présente invention vise à améliorer la conductivité électrique de telles couches d'oxydes métalliques déposées notamment sur des substrats en verre.

Pour cela elle propose d'employer comme poudre à projeter sur le substrat porté à haute température, des particules de composés organiques d'étain dont les dimensions sont comprises entre 10 et 60 micromètres. L'emploi d'une poudre dont les particules ne sont pas inférieures à 10 micromètres permet de déposer une couche d'oxyde d'étain à une vitesse telle que la taille des cristaux est relativement grande. Cela a pour effet d'augmenter la conductivité électrique de la couche d'oxyde formée et d'améliorer sa transparence. Les particules de cette poudre étant inférieures à 60 micromètres, celle-ci est facilement mise en suspension dans un gaz vecteur, ce qui contribue à la régularité de la couche formée.

Les composés organiques d'étain sont préparés de la manière suivante

Après avoir été séchés de manière à ce que leur teneur en eau devienne inférieure à 1 %, et de préférence inférieure à 0,5 %, les composés choisis sont broyés assez finement. La poudre obtenue est tamisée de manière à conserver uniquement la fraction granulométrique comprise entre 10 et 60 micromètres.

De même que la granulométrie, la faible teneur en eau de la poudre facilite sa mise en suspension dans le gaz et contribue à la régularité de la couche obtenue. Ce facteur joue également un rôle favorable pour obtenir des couches d'oxyde d'étain ayant une conductivité électrique élevée et une bonne transparence.

La poudre ainsi obtenue est mise en suspension dans un courant gazeux à grande vitesse et dirigée sur le substrat à revêtir porté à une température supérieure à 350°C et de préférence supérieure à 500°C.

Pour augmenter la conductivité électrique des couches d'oxyde d'étain, il est possible d'injecter de l'acide fluorhydrique gazeux dans le gaz vecteur. Il est également possible d'ajouter du fluorure d'ammonium ou du fluorure d'ammonium acide en poudre à la poudre de composés organiques d'étain. Le substrat sur lequel est formée la couche d'oxyde d'étain peut être une plaque ou un tube en verre, céramique, métal ou une autre matière.

Selon l'invention, il est avantageux d'utiliser

comme composés organiques d'étain l'un au moins des composés suivants: l'oxyde de dibutyl étain $(C_4H_9)_2SnO$, le dipropyl di-trifluoroacétate d'étain $(C_3H_7)_2Sn(CF_3COO)_2$ ou le dibutyl di-trifluoroacétate d'étain $(C_4H_9)_2Sn(CF_3COO)_2$.

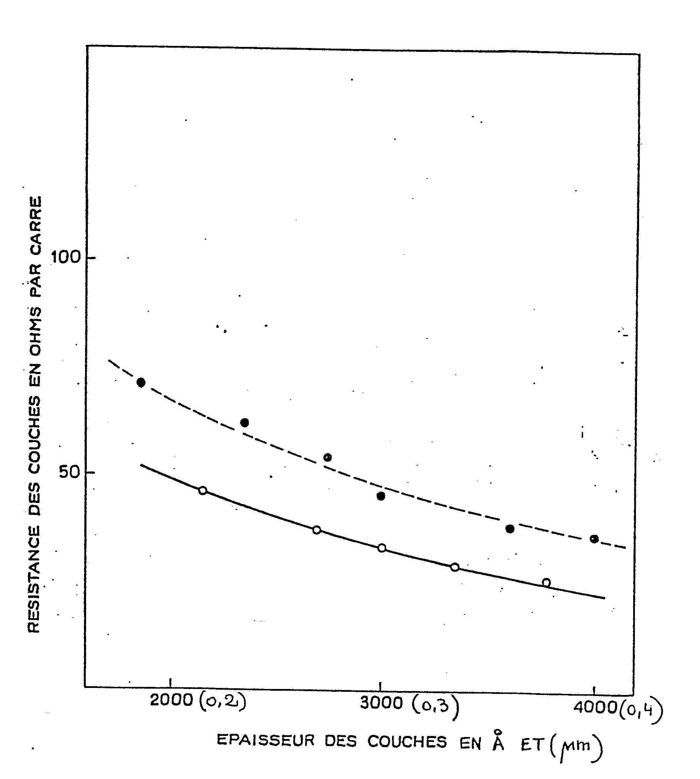

Les avantages de l'invention seront mieux perçus au travers des exemples suivants et de la figure jointe qui représente la variation de résistance électrique de la couche d'oxyde formée en fonction de la granulométrie de la poudre employée.

On a séché de l'oxyde de dibutyl étain DBTO dans un séchoir à air chaud recyclé jusqu'à amener sa teneur en eau à 0,4 %. Ensuite on écrasé cet oxyde au moyen d'un broyeur, obtenant une poudre dont la granulométrie était comprise entre 3 et 60 micromètres avec une moyenne de 23 micromètres. On a alors tamisé cette poudre et éliminé les particules d'une granulométrie inférieure à 10 micromètres; la poudre obtenue présentait alors une granulométrie de 10 à 60 micromètres avec une moyenne de 27 micromètres. Puis on a chargé un pistolet pour sablage avec cette poudre et projeté celle-ci avec de l'air à haute pression comprenant de l'acide fluorhydrique gazeux, sur 16 surface d'une plaque de verre portée à une température de 575 à 580° C. Le débit de poudre de DBTO était alors de 12 g/min. Le substrat de verre était une plaque carrée de 150 mm de côté et de 3 mm d'épaisseur; la pression de l'air utilisé était de kg/cm$^2$ avec un débit de 100 litres/min. L'acide fluorhydrique gazeux a été mélangé à l'air de manière à obtenir un rapport égal à F/Sn = 2. Dans ces conditions, on a déposé des couches d'oxyde d'étain ayant une épaisseur de 2000 à 4000 A (0,2 à 0,4 µm) sur la surface du verre en variant le temps de projection de 2 à 4 secondes.

On a mesuré l'épaisseur des couches d'oxydes d'étain ainsi obtenues à l'aide d'un appareil dit "Tally surf" puis on a procédé à la mesure de la résistance électrique. Les résultats obtenus sont représentés sur la figure par des cercles reliés par une courbe continue. A titre comparatif, on a chargé le pistolet pour sablage avec de la poudre de DBTO non tamisée ayant une granulométrie de 3 à 60 micromètres avec une moyenne de 23 micromètres. On a projeté cette poudre sur la surface d'une plaque de verre de mêmes dimensions que la précédente en conservant les réglages de l'exemple précédent. Les résultats obtenus sont représentés sur la figure par des ronds noirs reliés par une courbe en pointillé. La comparaison des deux courbes montre clairement l'influence de la granulométrie de la poudre choisie sur la résistance électrique, et, par là même, les avantages conférés par l'invention.

**Revendications**

1. Procédé de dépôt d'une couche d'oxyde d'éthin sur un substrat notamment en verre, d'après lequel on projette sur ledit substrat porté à haute température une poudre de composés organiques d'étain décomposable à la chaleur, caractérisé en ce que ladite poudre est formée de particules comprises entre 10 et 60 micromètres.

2. Procédé selon la revendication 1 caractérisé en ce que la teneur en eau de la poudre projetée est inférieure à 1 % et de préférence inférieure à 0,5 %.

3. Procédé selon l'une des revendications précédentes, caractérisé en ce que la poudre projetée contient au moins un des composés organiques d'étain suivants: oxyde de dibutyl étain, dipropyl di-trifluoroacétate d'étain et dibutyl di-trifluoroacétate d'étain.

**Patentansprüche**

1. Verfahren zum Aufbringen einer Zinnoxidschicht auf ein Substrat, insbesondere aus Glas, bei dem auf das auf hoher Temperatur befindliche Substrat ein Pulver von in der Wärme zersetzbaren organischen Zinnverbindungen aufgesprüht wird, dadurch gekennzeichnet, daß das Pulver aus Teilchen im Bereich zwischen 10 und 60 Mikrometer besteht.

2. Verfahren nach Anspruch 1, dadurch gekennzeichnet, daß der Wassergehalt des aufgesprühten Pulvers weniger als 1 % und vorzugsweise weniger als 0,5 % beträgt.

3. Verahren nach einem der voraufgehenden Ansprüche, dadurch gekennzeichnet, daß das aufgesprühte Pulver wenigstens eine der folgenden organischen Zinnverbindungen enthält: Dibutyl-Zinnoxid, Dipropyl-Zinn-di(trifluorazetat) und Dibutyl-Zinn-di(trifluorazetat).

**Claims**

1. Method of depositing a layer of tin oxide on a substrate such as glass, in which there is projected onto said substrate which is at an elevated temperature a powder of organic tin compounds which is decomposable on heating, characterised in that said powder is formed of particles from 10 to 60 micrometers in size.

2. Method according to claim 1, characterised in that the water content of the projected powder is less than 1% and preferably less than 0.5%.

3. Method according to one of the preceding claims, characterised in that the powder projected contains at least one of the following tin compounds: dibutyltin oxide, tin dipropyl di-trifluoro acetate and tin dibutyl di-trifluoroacetate.